# EUROPÄISCHE PATENTSCHRIFT

(11) **EP 4 515 125 B1**
(45) Veröffentlichungstag und Bekanntmachung des Hinweises auf die Patenterteilung: **04.11.2026**
(21) Anmeldenummer: 23722308.6
(22) Anmeldetag: 25.04.2023
(51) Int. Cl.: F16H 63/34, B60K 1/00

(54) **E-ACHSENMODUL EINES ELEKTROFAHRZEUGS**
E-AXLE MODULE OF AN ELECTRIC VEHICLE
MODULE D'ESSIEU ÉLECTRONIQUE D'UN VÉHICULE ÉLECTRIQUE

(30) Priorität: 29.04.2022 DE 102022204204
(43) Veröffentlichungstag der Anmeldung: 05.03.2025
(73) Patentinhaber: Robert Bosch GmbH, 70442 Stuttgart (DE)
(72) Erfinder: PETER, Simon, 71263 Weil Der Stadt (DE); LOSS, Tobias, 71636 Ludwigsburg (DE); HOFMANN, Nicolai, 70563 Stuttgart (DE)
(86) Internationale Anmeldenummer: PCT/EP2023/060773
(87) Internationale Veröffentlichungsnummer: WO 2023/208910

(56) Entgegenhaltungen:
- EP-A1- 2 388 497
- EP-B1- 3 354 920
- CN-A- 105 333 140
- DE-A1- 102017 124 592
- DE-A1- 102018 212 120
- DE-A1- 102019 201 989
- DE-A1- 102020 210 677
- DE-B3- 102020 109 116

## Beschreibung

### Technisches Gebiet

Die Erfindung bezieht sich auf ein E-Achsen-Modul eines Elektrofahrzeugs, wobei das E-Achsen-Modul mindestens eine Achse des Elektrofahrzeugs antreibt und eine elektrische Maschine, eine Leistungselektronik und ein Differenzial umfasst. Des Weiteren bezieht sich die Erfindung auf die Verwendung des E-Achsen-Moduls in einem Elektrofahrzeug.

### Stand der Technik

DE 10 2018 212 120 A1 hat ein E-Achsen-Modul zum Gegenstand mit mindestens einer in dieses integrierten E-Maschine und einem Getriebe sowie mit einer in eine dieser Baueinheiten integrierten Bremse. Dabei wird die integrierte Bremse gekapselt und ist gegen Umgebungseinflüsse abgeschirmt. In einer Ausführungsvariante können die im E-Achsen-Modul vorgesehenen integrierten Bremsen im stromlosen Zustand durch Federvorspannung eine Parksperrenfunktion realisieren, sodass eine gesonderte Feststellbremse nicht mehr erforderlich ist.

DE 10 2019 201 989 A1 offenbart eine integrierte Bremse eines E-Achsen-Moduls eines Fahrzeugs mit mindestens einer E-Maschine und mit einem Getriebe. Dabei wird ein asymmetrisch ausgebildeter Bremsrotor offenbart, der als Bremselement der integrierten Bremse dient. Die Betätigung der integrierten Bremse erfolgt in einer Ausführungsform über einen Bremsaktuator, in den eine Parksperrenfunktion integriert ist. Die Verwendung der integrierten Bremse kann bevorzugt in einem E-Achsen-Modul an einer Vorder- oder Hinterachse eines Fahrzeugs mit mindestens einer E-Maschine erfolgen.

DE 10 2006 001 895 B4 hat eine Parkbremse für Kraftfahrzeuge zum Gegenstand, die ein auf einem Achskörper in einem Bremsgehäuse angeordnetes Lamellenpaket, eine Feder, über die zum Schließen der Bremse das Lamellenpaket zusammengedrückt werden kann, und einen an der Feder anliegenden Kolben, dessen Kolbenraum zum Lösen der Parkbremse gegen die Federkraft mit hydraulischem Druck beaufschlagbar ist, umfasst. Dabei ist eine einfache Montage der Parkbremse möglich. Kolben und Druckbolzen sind bei der Umsetzung formschlüssig so entkoppelt, dass die vom Druckübertragungselement beziehungsweise vom Kolben der Betriebsbremse auf den Druckbolzen übertragenen Rotationsbewegungen des Lamellenpakets nicht auf den Parkbremskolben übertragen werden.

DE 10 2013 205 137 A1 hat eine Antriebsachse, insbesondere für Land- und Baumaschinen, zum Gegenstand, welche eine Betriebs- und eine Parkbremse aufweist. Lamellen einer Lamellenbremse stützen sich auf eine Druckplatte, wodurch der Planetenträger des Getriebes drehfest mit einem Gehäuseteil verbunden wird und dadurch die Antriebsachse im Sinne einer Parkbremse gebremst ist. Wird hingegen bei geöffneter Parkbremse Druckmittel in die Zuleitung geleitet, so bewegt sich ein Kolben auf die Lamellen der Lamellenbremse zu und drückt diese gegen die Druckplatte, wodurch die Antriebsachse im Sinne einer Betriebsbremse gebremst wird.

Bei neuartigen Fahrzeugtopologien, bei denen insbesondere für heckgetriebene Elektrofahrzeuge auf die konventionellen Radbremsen verzichtet werden könnte, verursacht die Platzierung von Parkbremseinrichtungen an den Rädern zusätzlichen Aufwand. Da an derartigen neuartigen Fahrzeugtopologien insbesondere an der Hinterachse keine Betriebsbremsen vorhanden sind, auf die ein zusätzlicher Parkbremsmechanismus wirken könnte, wird ein zusätzlicher Aufwand, so zum Beispiel eine eigens für das Parken installierte Bremse oder Trommel am Rad, erforderlich.

Aus der Druckschrift DE 10 2019 201 989 A1 ist ein E-Achsen-Modul mit den Merkmalen des Oberbegriffs des Anspruchs 1 bekannt.

Die DE 10 2017 124 592 A1 offenbart eine elektrische Antriebseinheit zum Antrieb eines Kraftfahrzeugs, die eine elektrisch antreibbare Radachse aufweist, wobei die Radachse mit einer Zentralbremse zur Übertragung eines Bremsmoments verbunden ist und ein Differentialgetriebe aufweist, wobei ein Übersetzungsgetriebe mit wenigstens zwei Getriebestufen und wenigstens einer Getriebezwischenwelle zwischen einem Traktionsmotor und dem Differentialgetriebe angeordnet ist, wobei die Zentralbremse in eine Getriebezwischenwelle des Übersetzungsgetriebes integriert ist.

### Darstellung der Erfindung

Erfindungsgemäß wird ein E-Achsen-Modul eines Elektrofahrzeugs vorgeschlagen, wobei das E-Achsen-Modul mindestens eine Achse des Elektrofahrzeugs antreibt und eine elektrische Maschine, eine Leistungselektronik und ein Differenzialgetriebe umfasst, wobei sich ausgangsseitig des Differentialgetriebes eine erste achszentral angetriebene Getriebewelle des Differentialgetriebes und dieser gegenüberliegend eine zweite achszentral angetriebene Getriebewelle des Differentialgetriebes erstrecken, wobei mindestens eine der beiden achszentral angetriebenen ausgangsseitigen Getriebewellen des Differentialgetriebes mit einem Parkbremsmodul versehen ist, dessen Komponenten zur Aktivierung oder Deaktivierung des Parkbremsmoduls eine Axialverschiebung relativ zueinander ausführen, wobei eine Aktivierung des Parkbremsmoduls die mindestens eine achszentral angetriebene, ausgangsseitige Getriebewelle blockiert. Erfindungsgemäß ist das Parkbremsmodul in Lamellenbauweise mit einem Lamellenpaket aus Statorlamellen und Rotorlamellen ausgeführt und umfasst ein Schneckenrad, welches über eine Schnecke angetrieben ist und welches eine Schneckenverzahnung und einen hülsenförmigen Ansatz aufweist, auf dem in Umfangsrichtung gesehen eine Anzahl von Gewindegängen verlaufen. Auf den Gewindegängen des Schneckenrads ist ein Steller aufgenommen, der eine zu den Gewindegängen komplementäre Innenverzahnung aufweist, wobei entsprechend einer Verdrehung des Schneckenrads durch Eingriff der Schnecke in die Schneckenverzahnung im Umfang des Schneckenrads eine Verdrehung der Gewindegänge und damit eine Axialverschiebung des Stellers erfolgt, wobei durch die Axialverschiebung des Stellers die einzelnen Lamellen des Lamellenpakets aus Statorlamellen und Rotorlamellen zusammengedrückt und das Parkbremsmodul aktiviert wird.

Durch die erfindungsgemäß vorgeschlagene Lösung lässt sich getriebenah mindestens ein Parkbremsmodul einbauen, welches wenig Bauraum umfasst und besonderen Sicherheitsaspekten Rechnung tragend als Parkbremsmodul mit selbsthemmender Aktuierung ausgeführt ist.

Durch die Lamellenbauweise weist das Parkbremsmodul eine besonders kompakte Bauweise auf und ist zudem für das Parken an Steigungen geeignet, da eine große Reibfläche durch aneinanderliegende Lamellen vorliegt und große Reibkräfte aufgebracht werden können.
Das Zusammenwirken von Schneckenrad und Schnecke ermöglicht die Auslegung des Parkbremsmoduls als selbsthemmendes Getriebe, welches auch bei Energieunterbrechung zum Parkbremsmodul eine Aufrechterhaltung der Parkbremswirkung sicherstellt.

Beim erfindungsgemäß vorgeschlagenen E-Achsen-Modul ist auf den Gewindegängen des Schneckenrads ein Steller aufgenommen, der eine zu den Gewindegängen des Schneckenrads komplementäre Innenverzahnung aufweist. Durch diese Lösung wird erreicht, dass bei einer Aktuierung des Schneckenrads durch die angetriebene Schnecke in Umfangsrichtung die am Schneckenrad an einem Ansatz vorgesehen Gewindegänge eine Axialverschiebung des Stellers bewirken, wodurch die einzelnen Lamellen des Lamellenpakets aus Statorlamellen und Rotorlamellen zusammengedrückt werden und hohe Reibkräfte erzeugt werden und somit das Parkbremsmodul aktiviert wird.

In vorteilhafter Weise ist am erfindungsgemäß vorgeschlagenen E-Achsen-Modul der Steller so ausgebildet, dass dieser durch einen federbelasteten Zuganker beaufschlagt ist, welcher den Steller in Richtung seiner deaktivierten Position drängt. Bei Deaktivierung des E-Achsen-Moduls kann somit der Steller in seine Ausgangsposition, d. h. eine deaktivierte Position, zurückgestellt werden, sodass die Lamellen des Parkbremsmoduls in Lamellenbauweise sicher auseinandergezogen werden und nicht Restreibung vorliegt.

Beim erfindungsgemäß vorgeschlagenen E-Achsen-Modul ist hervorzuheben, dass das Parkbremsmodul in Lamellenbauweise eine angetriebene Schnecke aufweist, deren Rotationsachse in vorteilhafter Weise senkrecht zur Rotationsachse des Schneckenrads orientiert ist. Dadurch wird eine Selbsthemmung am Parkbremsmodul erreicht. Es können jedoch auch Schnecken-/Schraubgetriebe eingesetzt werden, welche Rotationsachsen aufweisen, die andere Winkelorientierungen als 90°-Winkeleinstellung aufweisen und selbsthemmend sind.

Das erfindungsgemäß vorgeschlagene E-Achsen-Modul zeichnet sich in vorteilhafter Weise dadurch aus, dass die mittels eines Stellmotors angetriebene Schnecke auf einer Keilwelle aufgenommen ist. Dadurch ist eine Übertragung der Rotationsbewegung des Stellantriebs auf die Schnecke sichergestellt, ohne dass es zusätzlicher Elemente, wie beispielsweise einer Passfederverbindung oder einer teuren Mehrkeilverbindung, bedürfte.

Des Weiteren bezieht sich die Erfindung auf die Verwendung des E-Achsen-Moduls in einem Elektrofahrzeug an einer angetriebenen Achse, wie definiert in Anspruch 6.

### Vorteile der Erfindung

Durch die erfindungsgemäß vorgeschlagene Lösung in Gestalt des erfindungsgemäßen E-Achsen-Moduls ist ein Stillstandsmanagement für Elektrofahrzeuge möglich ohne konventionelle Radbremsen an einer mittels des E-Achsen-Moduls angetriebenen Achse, sei es die Vorderachse des Elektrofahrzeugs, sei es dessen Hinterachse. Mittels des erfindungsgemäß vorgeschlagenen E-Achsen-Moduls können beide Freiheitsgrade im Antriebsstrang abgebremst werden, was ein sicheres Parken in jeder Situation auch auf einem µ-split-Untergrund ermöglicht. Unter µ-split-Untergrund ist ein Fahrbahnuntergrund zu verstehen, welcher teilweise vereist ist, sodass eines der angetriebenen Räder auf einem vereisten Abschnitt der Fahrbahn steht und das andere auf einem griffigen Untergrund zum Stehen gekommen ist. Zudem können durch das erfindungsgemäß vorgeschlagene E-Achsen-Modul mit mindestens einem Parkbremsmodul Fahrdynamikfunktionen übernommen werden, welche bei ausschließlich achszentral gebremsten Fahrzeugen nicht erfüllt werden können.

Erfindungsgemäß ist die Realisierung eines Parkbremsmoduls an mindestens einem Differenzialausgang eines achszentral angetriebenen E-Achsen-Moduls gegeben. Das Parkbremsmodul erfüllt die Funktionalität einer Parkbremse und kann optional dazu verwendet werden, Momentendifferenzen zwischen den beiden Rädern der angetriebenen Achse herzustellen. Dies ist insbesondere zum Anfahren auf einseitig glatter, zum Beispiel vereister, Fahrbahn (µ-split-Szenario) notwendig, wenn keine Radbremsen für eine Antriebsschlupfregelung zur Verfügung stehen. Auch ist der Einsatz des erfindungsgemäß vorgeschlagenen E-Achsen-Moduls zur Erzeugung einer Momentendifferenz bei Bremsvorgängen auf einseitig glatten, so zum Beispiel vereisten, Fahrbahnen (µ-split-Szenario) möglich.

Weitere Vorteile der Anordnung des Parkbremsmoduls an mindestens einem Differenzialausgang, d. h. an einer Getriebewelle des Differenzialgetriebes des E-Achsen-Moduls, sind darin zu erblicken, dass dadurch eine Parkbremse bei Fahrzeugtopologien geschaffen wird, bei denen an angetriebenen Rädern, beispielsweise an der Hinterachse und an der Vorderachse, keine Reibbremsen, d. h. keine Betriebsbremsen, ausgeführt sind. Durch die erfindungsgemäß vorgeschlagene Lösung ergibt sich ein reduzierter Aufwand für die Verkabelung durch die Unterbringung im Fahrzeugchassis; es sind keine langen flexiblen elektrischen Leitungen zu den Rädern notwendig, der auf die Verkabelung einwirkende Umwelteinfluss wird signifikant reduziert. Gemäß der vorliegenden Erfindung ist das dem E-Achsen-Modul zugeordnete mindestens eine Parkbremsmodul in Lamellenbauweise ausgebildet, und somit ergeben sich relativ geringe Aktuatorkräfte, die durch den Aktuator aufzubringen sind, sowie kompakte Abmaße aufgrund der Lamellenbauweise. Bei dem in Lamellenbauweise ausgebildeten Parkbremsmodul ergeben sich geringe thermische Belastungen der Lamellen bei Nutzung des Parkbremsmoduls in dynamischen Fahrsituationen so zum Beispiel beim µ-split-Anfahren und beim Bremsen aufgrund der Größe der Reibfläche, die bei Anordnung mehrerer Lamellen gegeben ist. Es kann ein einfacher und kostengünstiger Parkbremsmechanismus eingesetzt werden, der modular an elektrische Achsen montierbar ist. Des Weiteren kann eine gemeinsame Steuergerätetopologie für das gesamte E-Achsen-Modul inklusive Parkmanagement ermöglicht werden. Es ergeben sich reduzierte Anforderungen bezüglich der Wirkung von Umwelteinflüssen und der Wirkung von Temperaturen bei der Anbringung der Parkbremsmodule im Fahrzeuginneren anstatt am Rad beziehungsweise an der Betriebsseite, d. h. im Bereich der Außenseite des Fahrzeugs.

Ein weiterer Vorteil ist darin zu erblicken, dass die thermische Belastung der Parkbremskomponenten des Parkbremsmoduls relativ gering ist, verglichen mit den thermischen Belastungen, die bei konventionellen Betriebsbremsen an Fahrzeugen, auch an Elektrofahrzeugen, auftreten können. Ein Nachziehen der Parkbremse nach dem Abstellen des Fahrzeugs zum Ausgleich von sich ergebendem Spiel bei Abkühlung der Bremsen (Hot-Reclamp-Funktion) ist des Weiteren nicht nötig.

Insbesondere können die E-Achsen-Module mit mindestens einem integrierten Parkbremsmodul an Fahrzeugen ohne Radbremsen an einer angetriebenen Achse eingesetzt werden.

Die Parkbremsmodule sind derart ausgelegt, dass Parkanforderungen nach dem aktuellen Stand der Technik erfüllt werden können. Beispielsweise ermöglichen sie das Parken an 30 %-Steigung/-Gefälle und das Parken auf einseitig glatter Fahrbahn (µ-split-Szenario) bei 15 % Steigung. Darüber hinaus sind die Parkbremsmodule derart ausgelegt, dass auch das notwendige Bremsmoment für das Anfahren mit Antriebsschlupfregelung (ASR/TCS) auf µ-split-Untergrund bei 15 % Steigung aufgebracht werden kann.

### Kurze Beschreibung der Zeichnungen

Anhang der Zeichnung wird die Erfindung nachstehend eingehender beschrieben.

Es zeigen:
- Figur 1: eine Fahrzeugtopologie eines Elektrofahrzeugs mit zentraler Wirbelstrombremse ohne an der Hinterachse vorgesehene Betriebsbremsen,
- Figur 2: eine perspektivische Ansicht eines erfindungsgemäßen E-Achsen-Moduls mit an den Getriebewellen angeordneten Parkbremsmodulen,
- Figur 3: eine Explosionsdarstellung der Komponenten eines in Lamellenbauweise ausgebildeten Parkbremsmoduls,
- Figur 4: eine Schnittdarstellung im Bereich der Getriebewelle und
- Figur 5: eine Schnittdarstellung durch das Parkbremsmodul durch dessen Motor-/Getriebeeinheit.

### Ausführungsvarianten der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

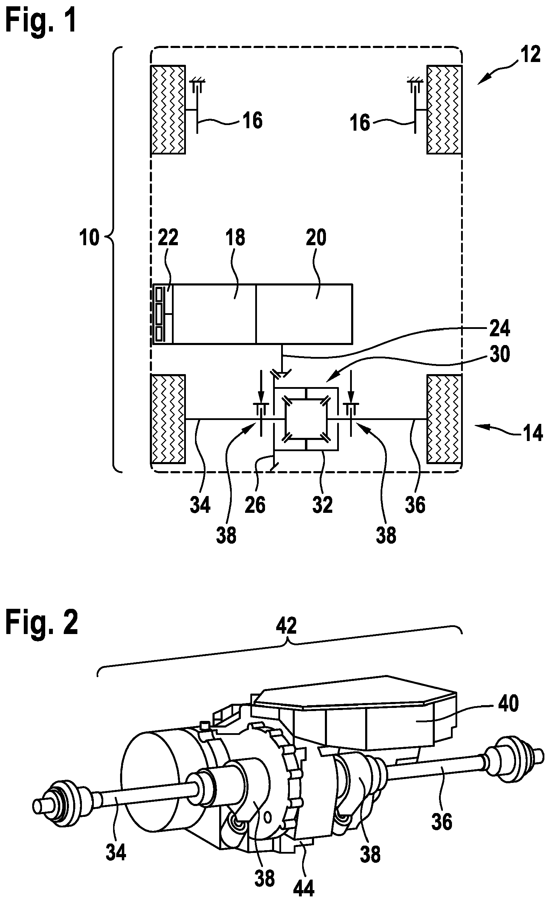

Aus der Darstellung gemäß Figur 1 geht eine beispielhafte Fahrzeugtopologie eines Elektrofahrzeugs 10 hervor. Das Elektrofahrzeug 10 umfasst eine Vorderachse 12 sowie eine Hinterachse 14. Während an der Vorderachse 12 an jedem der Räder Betriebsbremsen 16 vorgesehen sind, fehlen diese an den an der angetriebenen Hinterachse 14 vorgesehenen Rädern. In der Fahrzeugtopologie wie sie in Figur 1 dargestellt ist wird an der Hinterachse 14 ausschließlich über eine elektrische Maschine 18 angetrieben sowie über eine auf der Motorwelle der elektrischen Maschine 18 angeordnete Wirbelstrombremse 22 verzögert. Für die Parkfunktionalität kann weder die elektrische Maschine 18 im Generatormodus betrieben noch die Wirbelstrombremse 22 an sich eingesetzt werden. Aus diesem Grunde sind Parkbremsmodule 38 am Differenzialausgang eines Differenzials 30 angeordnet.

In der Fahrzeugtopologie wie sie in Figur 1 dargestellt ist, treibt das der elektrischen Maschine 18 zugeordnete Getriebe 20 über eine Abtriebswelle 24 ein Differenzialrad 26 des Differenzials 30 an, welches zudem einen Käfig 32 umfasst. Ausgangsseitig erstrecken sich vom Differenzial 30 eine erste Getriebewelle 34 beziehungsweise dieser gegenüberliegend eine zweite Getriebewelle 36.

In einer bevorzugten Ausgestaltungsvariante werden die Parkbremsmodule 38 durch unabhängige Steuergeräte angesteuert, um auch im Falle eines elektrischen Fehlers mindestens ein Parkbremsmodul 38 ansteuern zu können. Die Parkbremsmodule 38 sind derart ausgelegt, dass die Parkanforderungen nach dem aktuellen Stand der Technik zumindest erfüllt werden. Beispielsweise ermöglichen die Parkbremsmodule 38 das Parken an 30 %-Steigung/-Gefälle und das Parken auf einseitig glatter Fahrbahn (µ-split-Szenario) bei 15 % Steigung. Darüber hinaus sind die Parkbremsmodule 38 derart ausgelegt, dass auch das notwendige Bremsmoment für das Anfahren mit Antriebsschlupfregelung (ASR/TCS) im µ-split-Szenario bei 15 % Steigung aufgebracht werden kann. Auch berücksichtigt die thermische und mechanische Auslegung der Parkbremsmodule 38 thermische Anforderungen an derartige Beschleunigungsfälle.

Figur 2 zeigt in perspektivischer Ansicht ein E-Achsen-Modul 42 gemäß der vorliegenden Erfindung. Von diesem verlaufen an Ausgängen des Differenzials 30 jeweils die erste Getriebewelle 34 sowie die dieser gegenüberliegende zweite Getriebewelle 36 zu hier nicht dargestellten angetriebenen Rädern. In der perspektivischen Ansicht gemäß Figur 2 ist einer jeden der Getriebewellen 34, 36 im Bereich des Ausgangs des Differenzials 30 jeweils ein Parkbremsmodul 38 zugeordnet. Im oberen Bereich des E-Achsen-Moduls 42 befindet sich eine Leistungselektronik 40; die elektrische Maschine 18, Komponenten des Getriebes 20 sind in einem Systemgehäuse 44 untergebracht, sodass die aufgezählten Komponenten in der perspektivischen Ansicht gemäß Figur 2 nicht sichtbar sind.

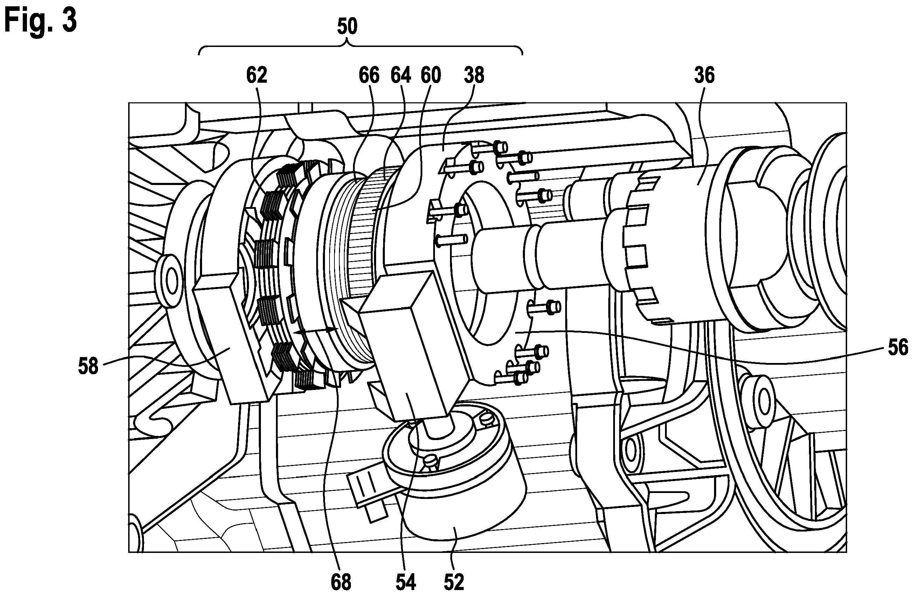

Figur 3 zeigt eine Explosionsdarstellung 50 eines Parkbremsmoduls 38 des Differenzials 30 des E-Achsen-Moduls 42.

Aus der Explosionsdarstellung 50 gemäß Figur 3 geht hervor, dass das Parkbremsmodul 38 einen ersten Gehäuseteil 56 sowie einen zweiten Gehäuseteil 58 aufweist, die in der Explosionsdarstellung 50 gemäß Figur 3 voneinander beabstandet sind. Dadurch wird eine Schneckenverzahnung 64 eines Schneckenrads 60 sichtbar. Neben der Schneckenverzahnung 64 umfasst das Schneckenrad 60 an einem Flansch eine Anzahl von Gewindegängen 66, die sich gewindeartig um den Flansch seitlich des Schneckenrads 60 erstrecken. Des Weiteren gehen aus der Explosionsdarstellung 50 gemäß der Darstellung in Figur 3 eine Anzahl von Lamellen 62 des in Lamellenbauweise ausgebildeten Parkbremsmoduls 38 hervor.

An dem ersten Gehäuseteil 56 des Parkbremsmoduls 38 befindet sich ein Schneckengehäuse 54. Diesem ist ein Aktuator in Gestalt eines E-Motors 52 zugeordnet, welcher eine im Schneckengehäuse 54 untergebrachte und hier in der Explosionsdarstellung 50 in Figur 3 nicht sichtbare Schnecke antreibt.

Die in Figur 3 nicht sichtbare Schnecke ist in Bezug auf deren Rotationsrichtung so angeordnet, dass sich die Rotationsachse der nicht sichtbaren Schnecke senkrecht zur Rotationsachse des Schneckenrads 60 erstreckt. Das Parkbremsmodul 38 ist selbsthemmend ausgeführt und verändert seine Position insbesondere im aktivierten Zustand nicht, was einen zusätzlichen Sicherheitsaspekt darstellt. Durch eine Aktivierung des E-Motors 52 greift die Schnecke, die im Schneckengehäuse 54 untergebracht ist, in die Schneckenverzahnung 64 des Schneckenrads 60 ein, sodass die Gewindegänge 66 verdreht werden. Dadurch erfolgt ein Zusammenpressen der einzelnen Lamellen 62, sodass das Parkbremsmodul 38 von seiner deaktivierten Position in seine aktivierte Position übergeht und die zweite Getriebewelle 36 blockiert, d. h. stillsetzt.

Die Lamellen 62 des in Lamellenbauweise ausgebildeten Parkbremsmoduls 38 gemäß der Explosionsdarstellung 50 in Figur 3 führen dabei relativ zueinander eine Axialverschiebung 68 aus. Beim Zusammenfahren der einzelnen Lamellen 62 entsteht eine Anzahl von Reibflächen, über die relativ große Kräfte zum Stillsetzen der zweiten Getriebewelle 36 erzeugt werden können. Ein weiterer Vorteil der Lamellenbauweise ist der Umstand, dass aufgrund der relativ großen sich einstellenden Reibfläche zwischen den einzelnen Lamellen 62 relativ geringe thermische Belastungen der Lamellen 62 bei Nutzung des Parkbremsmoduls 38 auftreten.

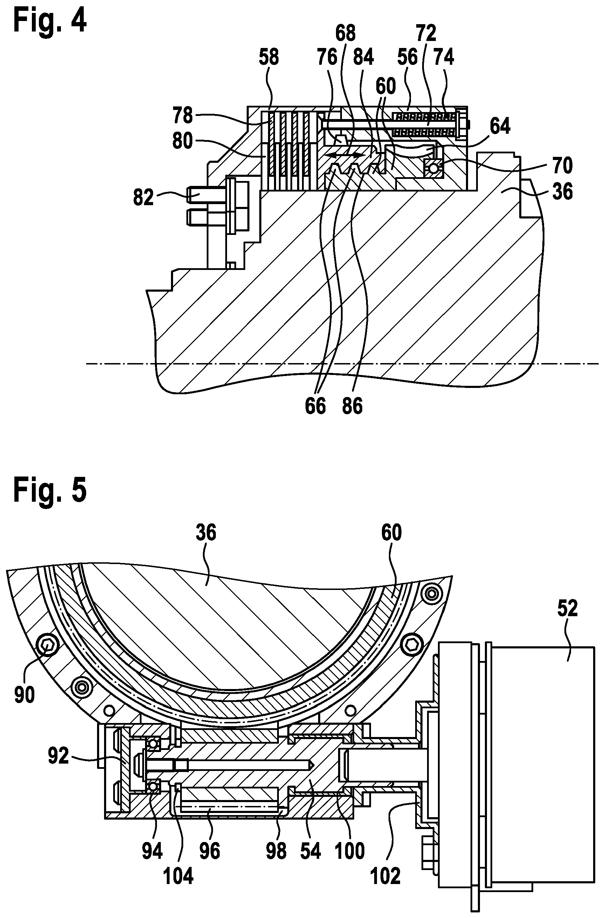

Figur 4 zeigt einen Schnitt durch das Parkbremsmodul 38 im Bereich der zweiten Getriebewelle 36.

Figur 4 zeigt, dass das Schneckenrad 60 mit Schneckenverzahnung 64 einen hülsenförmigen Ansatz aufweist, auf dem in Umfangsrichtung gesehen eine Anzahl von Gewindegängen 66 verlaufen. Komplementär zu dem Verlauf der Gewindegänge 66 auf dem hülsenförmigen Ansatz des Schneckenrads 60 verläuft eine Innenverzahnung 86 eines Stellers 84, sodass die Anordnung nach Art eines Keilwellenmechanismus wirkt. Der Steller 84 ist seinerseits durch einen Zuganker 72, der eine Rückstellfeder 74 aufweist, beaufschlagt. Durch den federbeaufschlagten Zuganker 72 wird der Steller 84 von den Lamellenpaaren wieder in eine deaktivierte Position zurückgestellt. Entsprechend der Verdrehung des Schneckenrads 60 durch Eingriff der in Figur 4 nicht dargestellten Schnecke in die Schneckenverzahnung 64 im Umfang des Schneckenrads 60 erfolgt eine Verdrehung der Gewindegänge 66 und damit die Axialverschiebung 68 des Stellers 84, welcher die einzelnen Lamellen 62 des in Figur 4 dargestellten Lamellenpakets aus Statorlamellen 78 und Rotorlamellen 80 zusammendrückt und das Parkbremsmodul 38 dementsprechend aktiviert.

Das Schneckenrad 60 ist mittels eines Kugellagers 70 abgestützt; ferner befindet sich oberhalb des Stellers 84 eine beispielsweise als Filz ausgebildete Dichtung 76. Aus der Schnittdarstellung gemäß Figur 4 gehen hier die aneinander anliegenden ersten und zweiten Gehäuseteile 56, 58 hervor, die in der Darstellung gemäß Figur 3 aufgrund der Explosionsdarstellung 50 beabstandet voneinander dargestellt worden sind.

Mittels eines Befestigungselements 82, beispielsweise ausgebildet als Schraube, stützt sich die Anordnung gemäß Figur 4 am Getriebegehäusedeckel ab. Eine Abstützung an der zweiten Getriebewelle 36 erfolgt über einen Formschluss der Rotorlamellen 80 mit der zweiten Getriebewelle 36.

Figur 5 zeigt eine Schnittdarstellung des Parkbremsmoduls 38 durch dessen Motorgetriebeeinheit.

Aus Figur 5 geht hervor, dass der E-Motor 52 mittels eines Motoradapters 102 mit dem Schneckengehäuse 54 (vgl. Explosionsdarstellung 50 gemäß Figur 3) verbunden ist. Der E-Motor 52 treibt eine Keilwelle 98 an, auf welcher eine Schnecke 96 angeordnet ist. Die Schnecke 96 wird vom Schneckengehäuse 54 umschlossen und greift in die Schneckenverzahnung 64 des Schneckenrads 60 gemäß der Explosionsdarstellung 50 in Figur 3 und gemäß der Darstellung in Figur 4 ein. Die Keilwelle 98 ist mittels eines Wälzlagers 94, insbesondere eines Kugellagers 70, im Schneckengehäuse 54 abgestützt. Die Schnecke 96 ist mittels eines Sicherungsrings 104 an der Keilwelle 98 gesichert; das Schneckengehäuse 54 wird über einen Lagerdeckel 92 verschlossen.

Die Verzahnung der Schnecke 96 kämmt mit der Schneckenverzahnung 64 des Schneckenrads 60; mittels Verschraubungen 90 beziehungsweise Verschraubungen und Federkombinationen sind die Gehäuseteile 56, 58, die das Schneckenrad 60 mit Schneckenverzahnung 64 umschließen, miteinander verbunden.

Im Schneckengehäuse 54 ist die Keilwelle 98, die die Schnecke 96 aufnimmt, ohne dass eine Passfederverbindung erforderlich ist, mittels eines Gleitlagers 100 gelagert, was zusätzlich zum Wälzlager 94 der Lagerung der Keilwelle 98 im Schneckengehäuse 54 dient.

Die obenstehend anhand der Figuren 1 bis 5 beschriebenen Parkbremsmodule 38 können auf beiden Seiten des Differenzials 30 angeordnet werden und jeweils gespiegelt ausgeführt werden. Für E-Achsen-Module 42 mit anderen Bauraumbedingungen kann die Anordnung der Komponenten, so zum Beispiel die Orientierung des E-Motors 52, variiert werden. Zudem ist es möglich, das Parkbremsmodul 38 an die Fahrzeuganforderungen anzupassen und beispielsweise Dimensionen, die Anzahl der Lamellen 62, den E-Motor 52 oder die Übersetzung des Getriebes 20 innerhalb des Parkbremsmoduls 38 anzupassen.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. E-Achsen-Modul (42) eines Elektrofahrzeugs (10), wobei das E-Achsen-Modul (42) mindestens eine Achse (12, 14) des Elektrofahrzeugs (10) antreibt und eine elektrische Maschine (18), eine Leistungselektronik (40) und ein Differenzialgetriebe (30) umfasst, wobei sich ausgangsseitig des Differentialgetriebes (30) eine erste achszentral angetriebene Getriebewelle (34) des Differentialgetriebes (30) und dieser gegenüberliegend eine zweite achszentral angetriebene Getriebewelle (36) des Differentialgetriebes (3) erstrecken, wobei mindestens eine der beiden achszentral angetriebenen, ausgangsseitigen Getriebewellen (34, 36) des Differentialgetriebes (30) mit einem Parkbremsmodul (38) versehen ist, dessen Komponenten (78, 80) zur Aktivierung oder Deaktivierung des Parkbremsmoduls (38) eine Axialverschiebung (68) relativ zueinander ausführen, wobei eine Aktivierung des Parkbremsmoduls (38) die mindestens eine achszentral angetriebene, ausgangsseitige Getriebewelle (34, 36) blockiert, **dadurch gekennzeichnet, dass** das Parkbremsmodul (38) in Lamellenbauweise mit einem Lamellenpaket aus Statorlamellen (78) und Rotorlamellen (80) ausgeführt ist und das Parkbremsmodul (38) ein Schneckenrad (60) umfasst, welches über eine Schnecke (96) angetrieben ist und welches eine Schneckenverzahnung (64) und einen hülsenförmigen Ansatz aufweist, auf dem in Umfangsrichtung gesehen eine Anzahl von Gewindegängen (66) verlaufen, und auf den Gewindegängen (66) des Schneckenrads (60) ein Steller (84) aufgenommen ist, der eine zu den Gewindegängen (66) komplementäre Innenverzahnung (86) aufweist, wobei entsprechend einer Verdrehung des Schneckenrads (60) durch Eingriff der Schnecke (96) in die Schneckenverzahnung (64) im Umfang des Schneckenrads (60) eine Verdrehung der Gewindegänge (66) und damit eine Axialverschiebung (68) des Stellers (84) erfolgt, wobei durch die Axialverschiebung des Stellers (84) die einzelnen Lamellen (62) des Lamellenpakets aus Statorlamellen (78) und Rotorlamellen (80) zusammengedrückt und das Parkbremsmodul (38) aktiviert wird.

2. E-Achsen-Modul (42) gemäß Anspruch 1, **dadurch gekennzeichnet, dass** der Steller (84) durch einen federbelasteten Zuganker (72) beaufschlagt ist, welcher den Steller (84) in Richtung seiner deaktivierten Position drängt.

3. E-Achsen-Modul (42) gemäß Anspruch 2, **dadurch gekennzeichnet, dass** die Rotationsachse der Schnecke (96) senkrecht zur Rotationsachse des Schneckenrads (60) verläuft.

4. E-Achsen-Modul (42) gemäß Anspruch 3, **dadurch gekennzeichnet, dass** die Schnecke (96) auf einer Keilwelle (98) aufgenommen ist.

5. E-Achsen-Modul (42) gemäß Anspruch 4, **dadurch gekennzeichnet, dass** die Keilwelle (98) über eine Lagerung, insbesondere ein Wälzlager (94), in einem Schneckengehäuse (54) abgestützt ist.

6. Verwendung des E-Achsen-Moduls (42) gemäß einem der Ansprüche 1 bis 5 in einem Elektrofahrzeug (10) an einer angetriebenen Achse (12, 14).

## Claims

1. E-axle module (42) of an electric vehicle (10), wherein the E-axle module (42) drives at least one axle (12, 14) of the electric vehicle (10) and comprises an electric machine (18), an electronic power system (40) and a differential (30), wherein, on the output side of the differential (30), there extends a first axially centrally driven transmission shaft (34) of the differential (30) and, opposite said shaft, a second axially centrally driven transmission shaft (36) of the differential (3), wherein at least one of the two axially centrally driven, output-side transmission shafts (34, 36) of the differential (30) is provided with a parking brake module (38), the components (78, 80) of which, for activating or deactivating the parking brake module (38), carry out an axial displacement (68) relative to one another, wherein activation of the parking brake module (38) blocks the at least one axially centrally driven, output-side transmission shaft (34, 36), **characterized in that** the parking brake module (38) is multidisc design with a disc pack consisting of stator discs (78) and rotor discs (80), and the parking brake module (38) comprises a worm gear (60) which is driven by a worm (96) and which has a worm gearing (64) and a sleeve-shaped extension on which a number of threads (66) run, as seen in the circumferential direction, and an actuator (84) is fitted on the threads (66) of the worm gear (60), the actuator having an internal toothing (86) that is complementary to the threads (66), wherein, in accordance with a rotation of the worm gear (60), engagement of the worm (96) in the worm gearing (64) in the circumference of the worm gear (60) causes rotation of the threads (66) and thus an axial displacement (68) of the actuator (84), with the axial displacement of the actuator (84) compressing the individual discs (62) of the disc pack of stator discs (78) and rotor discs (80) and activating the parking brake module (38).

2. E-axle module (42) according to Claim 1, **characterized in that** the actuator (84) is loaded by a spring-loaded tie rod (72), which forces the actuator (84) in the direction of its deactivated position.

3. E-axle module (42) according to Claim 2, **characterized in that** the axis of rotation of the worm (96) runs perpendicularly to the axis of rotation of the worm gear (60).

4. E-axle module (42) according to Claim 3, **characterized in that** the worm (96) is accommodated on a spline shaft (98).

5. E-axle module (42) according to Claim 4, **characterized in that** the spline shaft (98) is supported in a worm housing (54) via a bearing, in particular a rolling bearing (94).

6. Use of the E-axle module (42) according to any one of Claims 1 to 5 in an electric vehicle (10) on a driven axle (12, 14).

## Revendications

1. Module d'essieu électronique (42) d'un véhicule électrique (10), le module d'essieu électronique (42) entraînant au moins un essieu (12, 14) du véhicule électrique (10) et comprenant une machine électrique (18), une électronique de puissance (40) et une transmission différentielle (30), un premier arbre de transmission (34) entraîné de manière axialement centrale de la transmission différentielle (30) s'étendant côté sortie de la transmission différentielle (30) et un second arbre de transmission (36) entraîné de manière axialement centrale de la transmission différentielle (3) s'étendant à l'opposé de celui-ci, au moins un des deux arbres de transmission (34, 36) côté sortie entraînés de manière axialement centrale de la transmission différentielle (30) étant pourvu d'un module de frein de stationnement (38), dont les composants (78, 80) exécutent, pour activer ou désactiver le module de frein de stationnement (38), un coulissement axial (68) l'un par rapport à l'autre, une activation du module de frein de stationnement (38) bloquant l'au moins un arbre de transmission (34, 36) côté sortie entraîné de manière axialement centrale, **caractérisé en ce que** le module de frein de stationnement (38) est réalisé avec une conception à tôles avec un paquet de tôles composé de tôles de stator (78) et de tôles de rotor (80), et le module de frein de stationnement (38) comprend une roue hélicoïdale (60), qui est entraînée par une vis sans fin (96) et qui comporte une denture à vis sans fin (64) et un appendice en forme de douille, sur lequel, vu dans la direction périphérique, un certain nombre de spires de filetage (66) s'étendent, et un actionneur (84) est reçu sur les spires de filetage (66) de la roue hélicoïdale (60), lequel comporte une denture intérieure (86) complémentaire aux spires de filetage (66), une rotation des spires de filetage (66) et donc un coulissement axial (68) de l'actionneur (84) étant effectués conformément à une rotation de la roue hélicoïdale (60) par prise de la vis sans fin (96) avec la denture à vis sans fin (64) dans la périphérie de la roue hélicoïdale (60), les tôles (62) individuelles du paquet de tôles composé de tôles de stator (78) et de tôles de rotor (80) étant comprimées par le coulissement axial de l'actionneur (84) et le module de frein de stationnement (38) étant activé.

2. Module d'essieu électronique (42) selon la revendication 1, **caractérisé en ce que** l'actionneur (84) est sollicité par un tirant (72) chargé par un ressort, qui pousse l'actionneur (84) en direction de sa position désactivée.

3. Module d'essieu électronique (42) selon la revendication 2, **caractérisé en ce que** l'axe de rotation de la vis sans fin (96) s'étend perpendiculairement à l'axe de rotation de la roue hélicoïdale (60).

4. Module d'essieu électronique (42) selon la revendication 3, **caractérisé en ce que** la roue sans fin (96) est reçue sur un arbre cannelé (98).

5. Module d'essieu électronique (42) selon la revendication 4, **caractérisé en ce que** l'arbre cannelé (98) est supporté dans un carter de vis sans fin (54) par un palier, en particulier un palier à roulement (94).

6. Utilisation du module d'essieu électronique (42) selon l'une des revendications 1 à 5 dans un véhicule électrique (10) sur un essieu entraîné (12, 14).
